# EUROPEAN PATENT APPLICATION

(11) **EP 2 444 138 A1**
(43) Date of publication of application: **25.04.2012**
(21) Application number: 10188006.0
(22) Date of filing: 19.10.2010
(51) Int. Cl.: B01D 39/16, A47J 31/08

(54) **Polypropylene filter.**

(71) Applicant: Lenz, Sidney, Centro-Caçador-Sc (BR)
(72) Inventor: Lenz, Sidney, Centro-Caçador-Sc (BR)
(74) Representative: Baldi, Claudio

(57) **Abstract**

This present patent application refers to a "POLYPROPYLENE FILTER," a new filter manufactured exclusively of polypropylene (PP) with fresh raw material, weighting between 40 Grams and 45 Grams resulting in TNT (fabric-like material). Wherein there is a quadrilateral mono-block body (1) assembled from the union of the frontal face (9) with the posterior face (10), for all the lateral seams (3), and the posterior (4), resulting in an container (5) with inlet (6) between the frontal seam (7) and the posterior seam (8), which narrows from the inlet (6) to the back (4). The filter can be cleaned and reused, at least, three times.

## Description

This present patent application refers to, a new filter made, exclusively, of polypropylene (PP) wherein it is made out of fresh raw material, weighting between 40 Grams and 45 Grams, with no risk of contamination by impurity, resulting in a TNT C, also known as Nonwoven (fabric-like material).

This new filter might be used to filter teas, coffees, oils and other types of liquids and its main inventive novelty is that it can be cleaned and reused before its final disposal.

Another important factor is its lateral sealing process, via ultrasound auto fusion, that even after the process does not alter the flavor and does not contaminate the liquids after the filtering, maintaining the original indispensable characteristics.

We, also, ought to mention that the flow of the liquid, with this new TNT filter, tops the flow of the filters available in the market, and the contact with other utensils does not yield the absorption of odors, regardless of color.

Considering the above-mentioned, we can state that this is a new and original product, which will undoubtedly differ from the remaining available models, existing and generally known in the market. Its industrial manufacturing will remain under the responsibility of the general plastic industries, and stores in the segment, as well as coffee industries will sell the product.

The use of several types of filters is common, in households and in industries. In some regions, still, the cloth filter is used, and as time went by the disposable paper filter, which is a practical product, was developed, its disadvantages being the fact that it is disposable, and can be used only once, in addition to the fact that should it get wet, it can be disposed, and it cannot be stored for more than 5 years.

The exclusively polypropylene (PP) or (TNT) filter (fabric-like material), as it is known, after use, even with high-temperature water, can be cleaned and dried and it is ready for reuse, without losing the characteristics of a new filter.

We highlight its quick drying as one more detail to consider, and because it weights between 40 Grams and 45 Grams it yields a better filtering of the liquid through the fabric, without the transfer of powder or remaining residues.

Another advantage of the raw material is its shelf life, which might reach 10 years, while others' shelf life is of 5 years or less. Founded on the above-mentioned knowledge, the author, after several tests and researches related to raw materials, developed this model manufactured with low cost material gathering the innovative and improvement characteristics required by its use.

The annexed Figures clearly show the model that together with the numerical references, and detailed as follows, can be understood, easily.

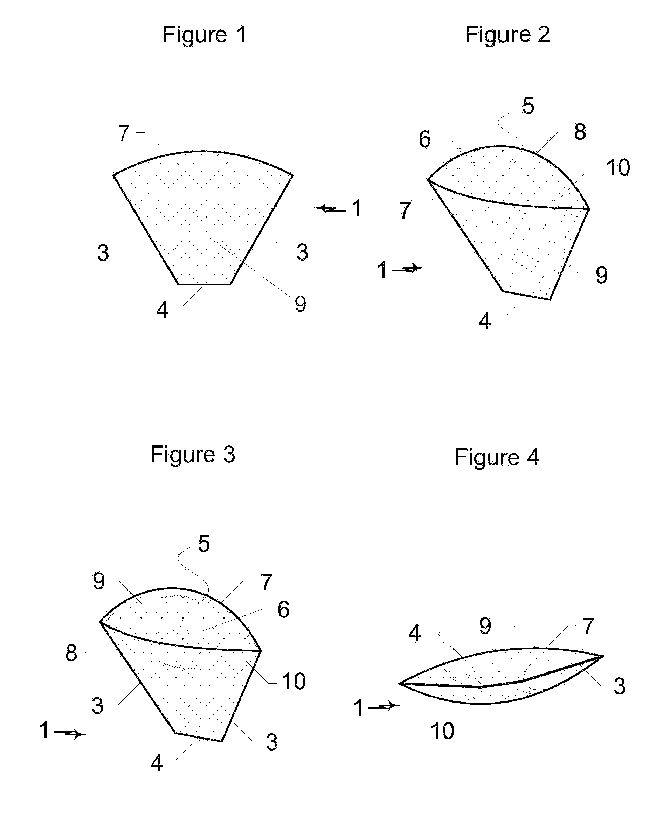

Figure 1 - orthogonal frontal view, the other face being equal.
Figure 2 - Top and Frontal view, in perspective.
Figure 3 - Top and Posterior view, in perspective.
Figure 4 - Lower and frontal view, in perspective.

In accordance with the sufficiency of the annexed Figures to illustrate, the characteristic of this present invention is a quadrilateral mono-block body (1) exclusively polypropylene (PP) manufactured, with fresh raw material, with no risk of contamination by impurity, resulting into a TNT (fabric-like material), known also as Nonwoven (fabric-like material) weighting between 40 Grams and 45 Grams. The quadrilateral mono-block body (1) is assembled from the union of the frontal face (9) with the posterior face (10), via an auto-fusion process in ultrasound, which warms the fabric threads, allowing the homogeneous fusion of the faces, along the lateral extremities or seam (3), and the back extremity or seam (4), resulting in an container (5) with inlet (6) between the frontal seam (7) and the posterior seam (8), which narrows from the inlet (6) to the back extremity or seam (4).

Therefore, the aim of this descriptive report is a new filter, exclusively polypropylene (PP) manufactured, resulting into TNT (fabric-like material), lined as evidenced by the research conducted, accompanied by the annexed Figures, which acted as aids, and which is different from the existing and similar models, generally known in the market.

## Claims

1. Polypropylene filter to filter liquids comprising a quadrilateral mono-block body (1), exclusively manufactured in polypropylene (PP) with fresh raw material consisting of TNT (fabric-like material).

2. Polypropylene filter according to claim 1, **characterized in that** said quadrilateral mono-block body (1) comprises:
- a frontal face (9) having lateral seams (3), a back seam (4) and a frontal seam (7),
- a posterior face (10) having lateral seams (3), a back seam (4) and a posterior seam (8),
said quadrilateral mono-block body (1) being assembled from the union of the frontal face (9) with the posterior face (10), along the lateral seams (3) and the beak seam (4),
said quadrilateral mono-block body (1) resulting in an container (5) with inlet (6) between the frontal seam (7) and the posterior seam (8), which narrows from the inlet (6) to the back seam (4).

3. Polypropylene filter according to claim 2, **characterized in that** the union of the frontal face (9) with the posterior face (10), takes place via an auto-fusion process in ultrasound.

4. Polypropylene filter according to anyone of the preceding claims, **characterized in that** said quadrilateral mono-block body (1) weighting between 40 grams and 45 grams.

5. Polypropylene filter according to anyone of the preceding claims **characterized in that** said quadrilateral mono-block body (1) can be reused after cleaning.
